# EUROPEAN PATENT SPECIFICATION

(11) **EP 0 660 180 B1**
(45) Date of publication and mention of the grant of the patent: **02.06.1999**
(21) Application number: 94120055.2
(22) Date of filing: 17.12.1994
(51) Int. Cl.: G03D 13/00, G03B 17/30

(54) **Method and apparatus for removal and/or inserting a filmstrip into a cartridge**
Verfahren und Gerät zur Entfernung und/oder Einführung eines Filmstreifens in einer Kassette
Méthode et appareil pour enlever et/ou introduire une bande de film dans une cassette

(30) Priority: 22.12.1993 US 172364
(43) Date of publication of application: 28.06.1995
(73) Proprietor: EASTMAN KODAK COMPANY, Rochester, New York 14650 (US)
(72) Inventor: Merle, Thomas Clark, c/o EASTMAN KODAK COMPANY, Rochester, New York 14650-2201 (US); Rowden, David Lawrence, c/o EASTMAN KODAK COMPANY, Rochester, New York 14650-2201 (US); Ryan, Dale William, c/o EASTMAN KODAK COMPANY, Rochester, New York 14650-2201 (US)
(74) Representative: Pohle, Reinhard, Dipl.-Phys.

(56) References cited:
- EP-A- 0 548 654
- EP-A- 0 636 924
- EP-A- 0 660 163
- EP-A- 0 660 165
- EP-A- 0 660 166
- DE-A- 2 503 577
- US-A- 3 684 623
- US-A- 5 215 273

## Description

Reference is made to commonly assigned applications EP 94 111 202.1 corresponding to EP-A-0 636 924 entitled "A Tool and Method For Detaching a Trailing End Portion of a Filmstrip From at Least One Hook Atop a Ramp on a Film Spool Inside a Film Cartridge", by Thomas C. Merle, Dale W. Ryan and David L. Rowden; EP 94 120 035.4 corresponding to EP-A-0 660 163 entitled "Tool for Filmstrip Attachment or Detachment", by Thomas C. Merle, Dale W. Ryan and David L. Rowden; EP 94 120 032.1 corresponding to EP-A-0 660 165 entitled "Method and Apparatus For Attaching or Detaching a Filmstrip to a Film Cartridge", by Thomas C. Merle and Dale W. Ryan; EP 94 120 033.5 corresponding to EP-A-0 660 166 entitled "A Cartridge and Method for Attaching or Detaching a Filmstrip to a Film Cartridge", by Thomas C. Merle.

The present invention relates generally to equipment used in the photoprocessing field, and more particularly, to a method and apparatus for removal and/or attachment of a filmstrip to a film cartridge.

Commonly assigned U.S. Patents 5,031,852 and 5,215,273 and EP-A-0 548 654 disclose a film cartridge/cassette wherein a film roll, whose outermost convolution is a film leader, is coiled about a spool core rotatably mounted within the cartridge for allowing film winding and unwinding. Typically, this type cartridge is referred to as a thrust-type cartridge. Due to the thrusting capability of these cartridges, various additional components may be necessary in order to thrust the filmstrip from the cartridge. For example, a light-lock door is used to allow dispensing and reattachment of the filmstrip to the cartridge and drive is provided for engaging the spool and rotating the spool to either wind or unwind the filmstrip. During photoprocessing of developed filmstrip, the filmstrip is often thrust and rewound at high rates of speed to maintain productivity in the various devices utilized. In such devices the filmstrip exit angle is important since the varying scroll diameter and different spool diameters that can be provided can cause the filmstrip to interfere with cartridge components, such as the light-lock door, or cartridge shell, during high speed wind or unwind.

In the prior art there exists technologies for utilizing rollers or filmstrip guides to control the exit/exit angle of the filmstrip during wind and/or unwind. These systems generally require active movement of the filmstrip during winding or unwinding of the filmstrip and are generally complex devices. These complex prior art devices add significant cost, are not very reliable and are subject to breakdown.

In accordance with the present invention, a method and apparatus for removal and/or inserting a film strip into a film cartridge are provided as defined in claims 6 and 1.

The present invention solves the problems of the prior art by providing a passive system which controls the angular movement of the filmstrip that is simple in design, economical to construct and to operate, can accommodate cartridges having different spool sizes and filmstrip lengths, and is reliable in its operation.

### DESCRIPTION OF THE DRAWINGS

In Figure 1 there is illustrated a cross-sectional view of a portion of an apparatus made in accordance with the present invention for removing or inserting a filmstrip into a film cartridge;
Figure 2 is a front elevational view of the apparatus of Figure 1 as taken along line 2-2;
Figure 3 is a perspective view of the cartridge of Figure 1;
Figure 4 is a cross-sectional view similar to Figure 1 with certain elements removed for clarity illustrating the relationship of the cartridge and the guide roller when the filmstrip is either being initially withdrawn, or substantially rewound into the cartridge;
Figure 5 is a view similar to Figure 4 illustrating the filmstrip being either in the position of finishing its exit from the cartridge, or its initial insertion into the cartridge for rewinding;
Figure 6 is a top plan view of the end portion of a filmstrip designed to engage the spool of the cartridge of Figure 1;
Figure 7 is a elevational view of the spool as taken along line 7-7 of Figure 5; and
Figure 8 is a cross-sectional view of the spool as taken along line 8-8 of Figure 7.

### DETAILED DESCRIPTION

The invention is disclosed as being embodied in a filmstrip unwinding and winding apparatus to be used typically with a film cartridge. Certain features of this type cartridge and of the winding and unwinding of the apparatus used to insert or remove the filmstrip is generally known, the description which follows is directed to, in particular, to elements forming a part of, or cooperating directly with the disclosed embodiment. It is to be understood, however, that other elements, not specifically shown or described, may take various forms known to persons of ordinary skill in the art.

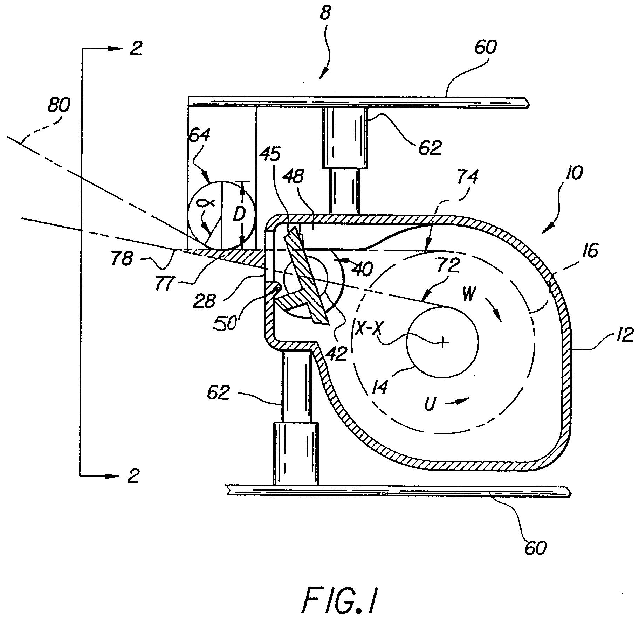

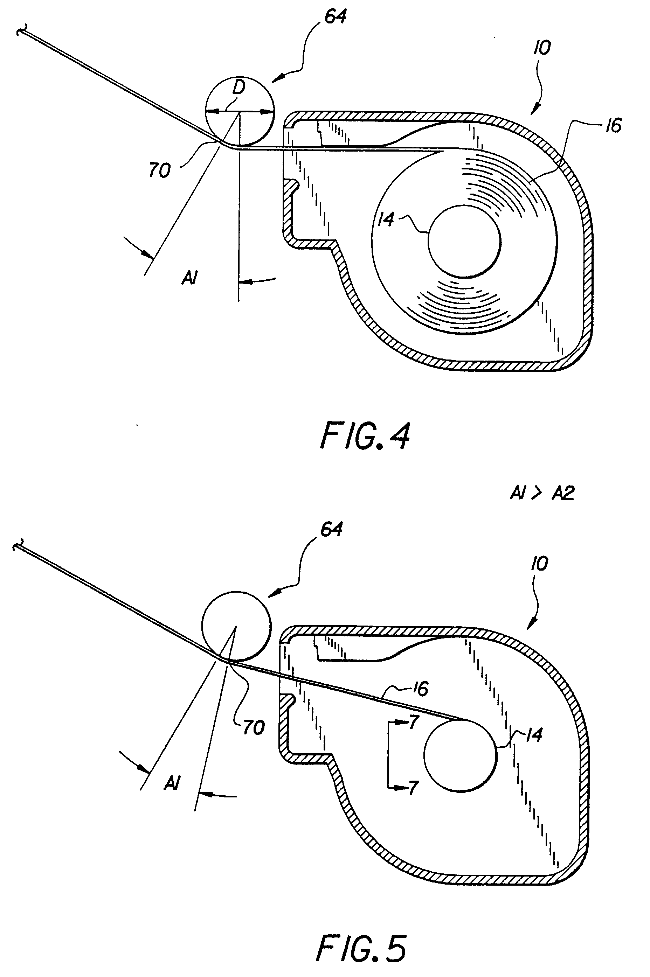

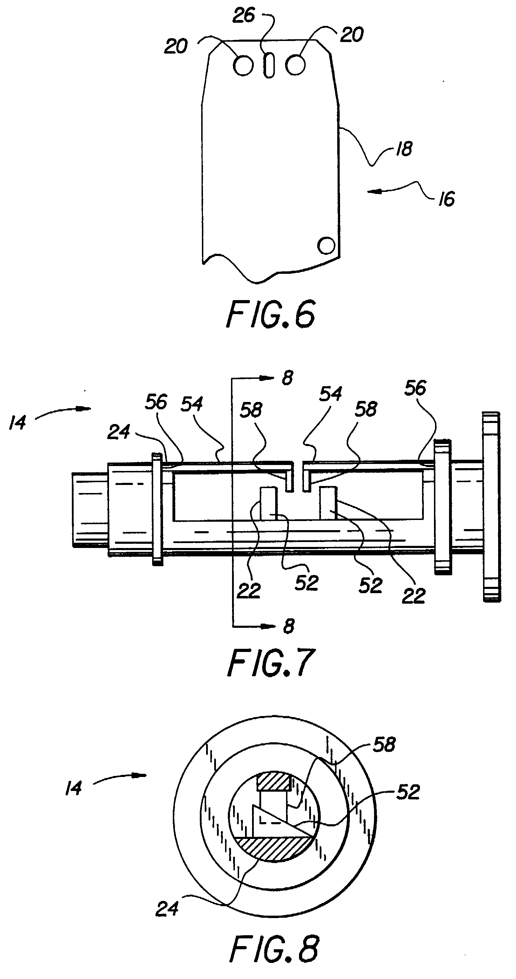

Referring now to the drawings, Figures 1-5 illustrate a portion of an apparatus 8 made in accordance with the present invention for removing or inserting a filmstrip from cartridge 10. The filmstrip cartridge 10 comprises a cartridge shell 12 and a filmstrip spool 14 rotatably mounted to the shell 12. In the particular embodiment illustrated, the cartridge 10 is designed to hold 24mm size filmstrip, however, the cartridge may be designed to contain any size film. The spool 14 is rotatable about an axis X in filmstrip winding and unwinding directions U and W inside the cassette shell 12. Thus, in the embodiment illustrated the cartridge 10 is of the thrust type. The cartridge shell 12 consists of two shell halves which are secured together by known means. A roll of filmstrip 16 is coiled about the spool 14 to form successive convolutions of the filmstrip 16. The filmstrip 16 includes an inner or trailing end portion 18 (see Figure 6) which is detachably secured to the spool 14. In the particular embodiment illustrated, the trailing end portion 18 is provided with a pair of openings 20 which are designed to engage a pair of projections 22 formed in the hub 24 of the spool 14. The trailing end portion 18 is further provided with a drive opening 26 which, in the particular embodiment illustrated, is designed to engage an attachment tool so that the trailing edge portion 18 can be guided into the cartridge for attaching the filmstrip 16 to the spool 14 as is later discussed herein in detail.

The cartridge 10 is provided with a opening/slot 28 for allowing a filmstrip 16 to go in to or out of the cartridge. In the particular embodiment illustrated, the opening 28 has a substantially rectangular configuration having a top edge 32, a bottom edge 34 which are substantially coplanar to the top and bottom surface of the filmstrip 16 and a pair of oppositely disposed side edges 36,38. The particular height H and width W of the opening 28 is selected in accordance with the needs of the cartridge and filmstrip. In the particular embodiment illustrated, the opening 28 has a height of about 12 0.30 cm (.12 inches) and a width of about 2.84 cm (1.12 inches).

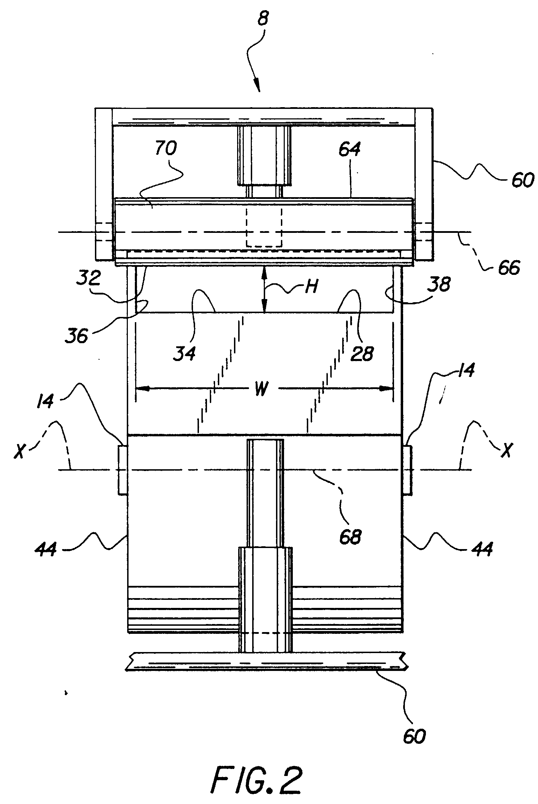

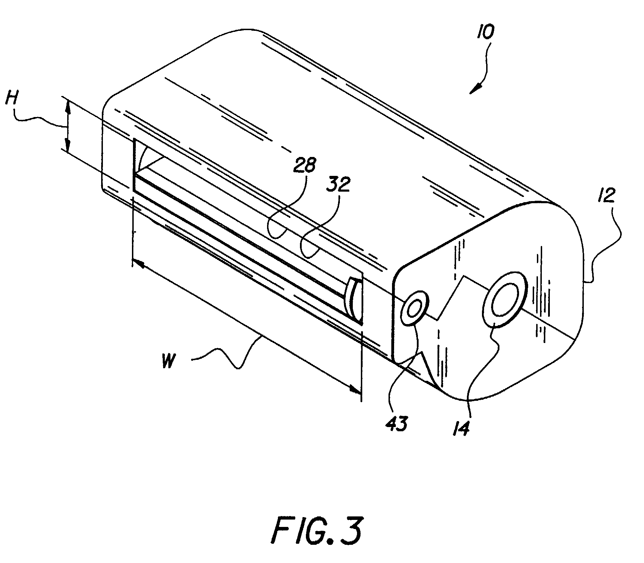

A light valve/door 40 is provided which extends across the opening 28. The light valve 40, when in the closed position, prevents ambient light from entering the cartridge 10 through the opening 28, and when in the open position, allows filmstrip 16 to either be inserted or removed from the cartridge 10. In the particular embodiment illustrated, the light valve 40 comprises a rotatable shaft 42 having a pair of ends rotatably mounted to the side walls 44 of the shell 12. The shaft 42 includes a ledge section 45 configured such that when in the closed position, the ledge section 45 will abut against a stop 48 provided on the interior of the shell adjacent the opening 28. A projection 50 is provided below the bottom edge 34 to assist in preventing any ambient light from passing into the cartridge. The shaft 42 and ledge section 45 are configured such that when the light valve 40 is in the open position, as illustrated in Figures 2 and 3, sufficient clearance is provided for allowing egress or ingress of the filmstrip 16. At least one end 43 of the shaft 42 extends through the cartridge 10. The end 43 is designed to be engaged by an appropriate tool for rotating the light valve 40 between the opened and closed positions. It is to be understood that the present invention is not limited to the particular light valve 40 disclosed.

Referring to Figures 7 and 8, there is illustrated an enlarged view of the spool 14. The spool 14 includes a pair of spaced projections 22 disposed in the central area of the hub 24 which are positioned so as to engage openings 20 in the trailing end 18 of the filmstrip 16. Preferably, as illustrated, projections 22 are provided with an inclined surface 52 which assist in the reattachment of the filmstrip as discussed later herein. The spool 14 is also provided with a pair of flexible retaining members 54 which extend from each of the lateral ends 56 of spool 14 and terminate in a pair of downwardly extending contact members 58. The flexible members 54 assist in retaining the trailing end 18 of the filmstrip 16 on the spool 14 once projections 22 have engaged openings 20.

The cartridge 10 is designed to be placed to an apparatus 8, for example, a photofinishing device such as a processor, printer, or any other device where it is necessary to insert or remove the filmstrip 16 from the cartridge 10. In the particular embodiment illustrated, there is illustrated an apparatus which includes a frame 60 having means for securely holding the cartridge 10 in a fixed position. In the particular embodiment illustrated, the apparatus includes a pair of moveable pins 62 which are used to secure and hold the cartridge 10 in a fixed relative position with respect to the frame 60. The apparatus is further provided with a guide roller 64 which is rotatably mounted to the frame 60 for rotation about axis 66. The axis 66 is substantially parallel to the axis 68 of the spool 14. The guide roller 64 has an outer engaging surface 70 designed to engage and provide a force against the filmstrip 16 as it enters or leaves the cartridge 10. By properly positioning the guide roller 64, the device prevents the filmstrip 16 from engaging the edges of the opening or other internal part of the cartridge 10 during winding or unwinding. The guide roller 64 maintains the filmstrip path within the cartridge 10 within a safe, non-contact region. It is critical that the guide roller 64 be positioned such that the wrap of the filmstrip about the guide roller 64 occurs in a zone defined by the cartridge and filmstrip geometry. In particular, a first tangent line (the "innermost tangent line") is drawn between the tangent of the innermost circle of the filmstrip wrapped about the spool 14 as illustrated by dash line 72, and which passes through the bottom edge 34 of opening 28. A second tangent line (the "outermost tangent line") is drawn between the outermost point wherein the filmstrip 16 is wrapped about the spool 14 as represented by dash line 74 and the top edge 32 of opening 28. When these two lines are constructed, they will meet at a point 78 somewhere outside of the cartridge 10. The outer surface 70 of the guide roller is positioned such that the contact surface 70, as it is being fed out or into the cartridge 10, will engage the filmstrip 16 in the area defined by the two lines and the outer surface of the cartridge as illustrated by the shaded area 77 (the "Working Area") in Figure 1. These tangent lines 72,74 are constructed such that the filmstrip 16 will not substantially contact the light valve 40 or any other physical feature of the cartridge shell. Preferably, the innermost tangent line 72 and the outermost tangent line 74 are selected from the various cartridges sizes the apparatus is designed to be used with so that greatest variation in size is taken into consideration. Then the guide roller 64 is positioned so that the contact surface 70 falls within the working area 77 so defined thus allowing use of the various size cartridges. The guide roller has a diameter D such that the contact surface as its contacts the filmstrip 16 will not adversely affects it physical and/or chemical properties. Generally, the diameter D may range from about 0.46 cm (18 inches) to 0.97 cm (.38 inches) and in the particular embodiment illustrated the diameter D is about 0.61 cm (.24 inches). However, the diameter D may be any value desired as long as it does not adversely affect the filmstrip 16 and/or cartridge 10 and falls within the working area 77 as illustrated in Figure 1.

The filmstrip path 80 of the filmstrip as it enters or leaves the cartridge 10 is such that there is an angle a formed such that there is a minimum wrap angle Al for when the filmstrip is near its outermost point on the spool 14 and wrap angle A2 when the filmstrip is nearly withdrawn completely from the cartridge as represented by Figure 3. Preferably, the wrap angle A1 is greater than A2. In the particular embodiment illustrated, angle A1 is about 30° and angle A2 is about 15°.

In order to understand the present invention, a brief description of the operation the apparatus of Figures 1-6 will now be described.

When a filmstrip 16 is tc be removed from the cartridge 10, the spool 14, after the light valve 40 has been appropriately moved to the open position, is rotated in the appropriate direction to thrust the filmstrip 16 out of the cartridge 10. The leading edge of the filmstrip 16 is appropriately grasped by any known mechanism and taken along path 80. Before fully removing the filmstrip 16 from the cartridge 10, the filmstrip 16 typically must first be disengaged from the spool 14. Therefore, when the film has been advanced to a predetermined position, a detach tool, not shown, is placed within the cartridge to disengage the trailing end portion 18 from the spool 14. An example of a suitable tool and its use is forth in greater detail in EP 94 111 202.1 and EP 94 120 032.1, which were both previously referred to. However, any suitable tool may used as required for detaching the filmstrip from the spool 14. In the embodiment illustrated, the tool would be used to disengage the projection 22 from openings 20 in trailing end portion 18, thus allowing the filmstrip 16 to be pulled free from the cartridge 10.

When the filmstrip 16 is to be reintroduced into the cartridge 10, the light valve 40 is rotated to the open position and a tool is used to engage the trailing end portion of the filmstrip with the spool 14. A detailed description of a suitable tool that is used for connecting the trailing edge to the spool 14 is described in detail in copending and co-assigned application, Serial No. [Attorney Docket No. 69,103], entitled "Tool for Filmstrip Attachment or Detachment", by Thomas C. Merle, Dale W. Ryan and David L. Rowden, which was previously referred to and incorporated by reference. In the embodiment illustrated, the tool would be used to bring forward the trailing end portion 18, sliding the filmstrip over projection 22 until they engage openings 20. After attachment of the filmstrip to the spool 14 is completed, the spool 14 is rotated in the appropriate direction for winding of the filmstrip 16 thereon.

The present invention provides a passive system that requires no active adjustment during winding or unwinding of the filmstrip and which can be used for a variety of cartridges having different size spools and length filmstrips. The mechanical complexity and reliability are greatly improved and the number of parts and controlled actuations have been substantially reduced. Further, the present invention eliminates the need for providing complex positional controls for the filmstrip as it exits the device.

It is to be understood that various other changes and modifications may be made without departing from the scope of the present invention. The present invention being defined by the following claims.

### Parts List:

- 8: apparatus
- 10: cartridge
- 12: shell
- 14: spool
- 16: filmstrip
- 18: end portion
- 20: openings
- 22: projections
- 24: hub
- 26: drive opening
- 28: opening/slot
- 32: top edge
- 34: bottom edge
- 36,38: side edges
- 40: light valve/door
- 42: rotatable shaft
- 43: end
- 44: side walls
- 45: ledge section
- 48: stop
- 50: projection
- 52: inclined surface
- 54: flexible members
- 56: lateral ends
- 58: extending contact members
- 60: frame
- 62: moveable pins
- 64: guide roller
- 66, 68: axis
- 70: outer engaging surface
- 72: dash line
- 74: line
- 77: shaded area
- 78: point
- 80: filmstrip path

## Claims

1. Apparatus (8) for removing and/or inserting a filmstrip (16) into a filmstrip cartridge (10), said cartridge having a spool (14) rotatably mounted therein about an axis (68) of rotation and an opening (28) through which said filmstrip (16) may be inserted or removed from said cartridge (10), said opening having a top edge (32) and a bottom edge (34), said apparatus comprising:
clamping means (62) for holding said filmstrip cartridge (10) in a predetermined position;
characterized by:
a guide roller (64) having an axis (66) of rotation, said guide roller being positioned in close proximity with respect to said cartridge opening (28) so that the axis of rotation of said guide roller (64) is substantially parallel to the axis of rotation of said spool (14), said guide roller (64) having an outer contact surface (70) about which said filmstrip (16) is wrapped so as to form a wrap angle (α) with respect to the axis of rotation of said guide roller, said guide roller (64) being positioned such that the outer contact surface (70) of the guide roller (64) is positioned in a zone defined by the intersection of an innermost tangent line and an outermost tangent line, said innermost tangent line being defined by a line that is tangent with an outer surface of the spool (14) without any filmstrip (16) and the bottom edge (34) of said opening (28), and the outermost tangent line being defined by a line that is tangent to an outermost diameter of the filmstrip when the filmstrip (16) is fully loaded on the spool (14) and the top edge (32) of the opening (28).

2. Apparatus according to claim 1, wherein said apparatus (8) includes a frame (60) and said guide roller (64) and said clamping means (62) for holding said filmstrip cartridge (10) in position are secured to said frame (60).

3. Apparatus according to claim 1, wherein said clamping means (64) for holding said filmstrip cartridge (10) in position comprises a pair of retractable pins.

4. Apparatus according to claim 1, wherein said guide roller (64) has a diameter in range of about 4,6 mm to 9,7 mm.

5. Apparatus according to claim 1, wherein said guide roller (64) has a diameter of about 6,1 mm.

6. A method of inserting or removing a filmstrip (16) from a cartridge (10) comprising the step of :
a. providing a cartridge having a spool (14) rotatably mounted therein about an axis (66) of rotation and an opening (28) through which said filmstrip (16) may be inserted or removed; characterized by the steps of:
b. providing an apparatus as defined in claim 1 comprising a guide roller (64) having an axis of rotation, said guide roller being positioned in close proximity with respect to said cartridge opening (28) so that the axis of rotation of said guide roller (64) is substantially parallel to the axis of rotation of said spool, said guide roller having an outer contact surface (70) about which said filmstrip (16) is wrapped to form a wrap angle (α) with respect to the axis of rotation of said guide roller, said guide roller being positioned such that the outer contact surface of said guide roller is positioned in a zone defined by the intersection of an innermost tangent line and an outermost tangent line as defined in claim 1; and
c. inserting or removing the filmstrip (16) from said cartridge (10) so that the filmstrip is in direct contact with said guide roller (64).

7. A method according to claim 6, wherein said filmstrip (16) forms a first wrap angle when the filmstrip is at the outermost tangent line and a second wrap angle when the filmstrip is at the innermost tangent line, said filmstrip is inserted or removed from said cartridge (10) such that the first wrap angle is greater than said second wrap angle.

## Patentansprüche

1. Vorrichtung (8) zum Entnehmen eines Filmstreifens (16) aus einer Filmpatrone (10) und/oder zum Einführen des Filmstreifens in die Filmpatrone, die eine um eine Drehachse (68) drehbar gelagerte Spule (14) und eine Öffnung (28) aufweist, durch die der Filmstreifen (16) in die Patrone (10) einführbar oder aus ihr entnehmbar ist, wobei die Öffnung eine obere Kante (32) und eine untere Kante (34) umfaßt und die Vorrichtung mit einer Klemmvorrichtung (62) zum Halten der Filmpatrone (10) in einer vorgegebenen Position versehen ist, **gekennzeichnet durch** eine Führungswalze (64), die eine Drehachse (66) aufweist und in unmittelbarer Nähe der Patronenöffnung (28) angeordnet ist, derart, daß die Drehachse der Führungswalze (64) im wesentlichen parallel zur Drehachse der Spule (14) verläuft, die eine äußere Berührungsfläche (70) umfaßt, um die der Filmstreifen (16) derart gewickelt ist, daß er bezüglich der Drehachse der Führungswalze einen Winkel a bildet, und die derart positioniert ist, daß ihre äußere Berührungsfläche (70) in einer durch den Schnitt von einer innersten tangentialen Linie und einer äußersten tangentialen Linie gebildeten Zone angeordnet ist, wobei die innerste tangentiale Linie durch eine Linie gebildet ist, die tangential zu einer äußeren Fläche der nicht mit einem Filmstreifen (16) bewickelten Spule (14) und zu der unteren Kante (34) der Öffnung (28) verläuft, und wobei die äußerste tangentiale Linie durch eine Linie gebildet ist, die zu einem äußersten Durchmesser des ganz auf die Spule (14) gewickelten Filmstreifens und zu der oberen Kante (32) der Öffnung (28) tangential verläuft.

2. Vorrichtung nach Anspruch 1, dadurch gekennzeichnet, daß ein Rahmen (60) vorgesehen ist, an dem die Führungswalze (64) und die Klemmvorrichtung (62) zum Halten der Filmpatrone (10) in der vorgegebenen Position befestigbar sind.

3. Vorrichtung nach Anspruch 1, dadurch gekennzeichnet, daß die Klemmvorrichtung (62) zum Halten der Filmpatrone (10) in der vorgegebenen Position zwei einziehbare Stifte aufweist.

4. Vorrichtung nach Anspruch 1, dadurch gekennzeichnet, daß die Führungswalze (64) einen Durchmesser von etwa 4,6 mm bis 9,7 mm hat.

5. Vorrichtung nach Anspruch 1, dadurch gekennzeichnet, daß die Führungswalze (64) einen Durchmesser von etwa 6,1 mm hat.

6. Verfahren zum Einführen eines Filmstreifens (16) in eine Filmpatrone (10) oder zum Entnehmen des Filmstreifens aus der Patrone, mit dem Schritt
a) Vorsehen einer Patrone mit einer um eine Drehachse (68) drehbar gelagerten Spule (14) und einer Öffnung (28), durch die der Filmstreifen (16) einführbar oder entnehmbar ist,
**gekennzeichnet durch** die Schritte:
b) Vorsehen einer Vorrichtung nach Anspruch 1 mit einer eine Drehachse aufweisenden Führungswalze (64), die in unmittelbarer Nähe der Patronenöffnung (28) angeordnet ist, derart, daß die Drehachse der Führungswalze (64) im wesentlichen parallel zur Drehachse der Spule verläuft, die eine äußere Berührungsfläche (70) umfaßt, um die der Filmstreifen (16) derart gewickelt ist, daß er bezüglich der Drehachse der Führungswalze einen Winkel a bildet, und die derart positioniert ist, daß ihre äußere Berührungsfläche in einer durch den Schnitt von einer innersten tangentialen Linie und einer äußersten tangentialen Linie gebildeten Zone gemäß Anspruch 1 angeordnet ist, und
c) Einführen des Filmstreifens (16) in die Filmpatrone (10) oder Entnehmen des Filmstreifens aus der Patrone, derart, daß sich der Filmstreifen in unmittelbarer Berührung mit der Führungswalze (64) befindet.

7. Verfahren nach Anspruch 6, dadurch gekennzeichnet, daß der Filmstreifen (16) einen ersten Winkel bildet, wenn er sich an der äußersten tangentialen Linie befindet, und einen zweiten Winkel, wenn er sich an der innersten tangentialen Linie befindet, und daß der Filmstreifen in die Patrone (10) einführbar und aus ihr entnehmbar ist, derart, daß der erste Winkel größer ist als der zweite Winkel.

## Revendications

1. Appareil (8) pour retirer et/ou introduire une pellicule photographique (16) dans une cartouche de pellicule photographique (10), ladite cartouche comportant une bobine (14) montée avec faculté de rotation dans celle-ci autour d'un axe (68) de rotation et une ouverture (28) à travers laquelle ladite pellicule photographique (16) peut être introduite ou retirée de ladite cartouche (10), ladite ouverture présentant un bord supérieur (32) et un bord inférieur (34), ledit appareil comprenant :
un moyen d'accrochage (62) pour maintenir ladite cartouche de pellicule photographique (10) dans une position prédéterminée ;
caractérisé par :
un rouleau de guidage (64) ayant un axe (66) de rotation, ledit rouleau de guidage étant positionné au voisinage immédiat de ladite ouverture de cartouche (28) de sorte que l'axe de rotation dudit rouleau de guidage (64) soit sensiblement parallèle à l'axe de rotation de ladite bobine (14), ledit rouleau de guidage (64) présentant une surface de contact externe (70) autour de laquelle la pellicule photographique (16) est enroulée de façon à former un angle d'enroulement (a) par rapport à l'axe de rotation dudit rouleau de guidage, ledit rouleau de guidage (64) étant positionné de telle manière que la surface de contact externe (70) du rouleau de guidage (64) soit positionnée dans une zone définie par l'intersection d'une ligne tangente la plus à l'intérieur et d'une ligne tangente la plus à l'extérieur, ladite ligne tangente la plus à l'intérieur étant définie par une ligne qui est tangente à une surface externe de la bobine (14) sans aucune pellicule photographique (16) et au bord inférieur (34) de ladite ouverture (28) et la ligne tangente la plus à l'extérieur étant définie par une ligne qui est tangente à un diamètre le plus à l'extérieur de la pellicule photographique lorsque la pellicule photographique (16) est complètement chargée sur la bobine (14) et au bord supérieur (32) de l'ouverture (28).

2. Appareil selon la revendication 1, dans lequel ledit appareil (8) inclut un cadre (60), et ledit rouleau de guidage (64) et ledit moyen d'accrochage (62) pour maintenir ladite cartouche de pellicule photographique (10) en position sont fixés audit cadre (60).

3. Appareil selon la revendication 1, dans lequel ledit moyen d'accrochage (64) pour maintenir ladite cartouche de pellicule photographique (10) en position comprend une paire de broches rétractables.

4. Appareil selon la revendication 1, dans lequel ledit rouleau de guidage (64) présente un diamètre dans la plage allant d'environ 4,6 mm à 9,7 mm.

5. Appareil selon la revendication 1, dans lequel ledit rouleau de guidage (64) présente un diamètre d'environ 6,1 mm.

6. Procédé consistant à introduire ou retirer une pellicule photographique (16) d'une cartouche (10), comprenant les étapes consistant à :
a. prévoir une cartouche comportant une bobine (14) montée avec faculté de rotation dans celle-ci autour d'un axe (66) de rotation et une ouverture (28) à travers laquelle ladite pellicule photographique (16) peut être introduite ou retirée ;
caractérisé par les étapes consistant à:
b. prévoir un appareil, comme défini dans la revendication 1, comprenant un rouleau de guidage (64) ayant un axe de rotation, ledit rouleau de guidage étant positionné au voisinage immédiat de ladite ouverture de cartouche (28) de sorte que l'axe de rotation dudit rouleau de guidage (64) soit sensiblement parallèle à l'axe de rotation de ladite bobine, ledit rouleau de guidage présentant une surface de contact externe (70) autour de laquelle ladite pellicule photographique (16) est enroulée pour former un angle d'enroulement (a) par rapport à l'axe de rotation dudit rouleau de guidage, ledit rouleau de guidage étant positionné de manière telle que la surface de contact externe dudit rouleau de guidage soit positionnée dans une zone définie par l'intersection d'une ligne tangente la plus à l'intérieur et d'une ligne tangente la plus à l'extérieur, comme défini dans la revendication 1 ; et
c. introduire ou retirer la pellicule photographique (16) de ladite cartouche (10) de sorte que la pellicule photographique soit en contact direct avec ledit rouleau de guidage (64).

7. Procédé selon la revendication 6, dans lequel ladite pellicule photographique (16) forme un premier angle d'enroulement lorsque la pellicule photographique est au niveau de la ligne tangente la plus à l'extérieur et un second angle d'enroulement lorsque la pellicule photographique est au niveau de la ligne tangente la plus à l'intérieur, ladite pellicule photographique est introduite ou retirée de ladite cartouche (10) d'une manière telle que le premier angle d'enroulement est supérieur audit second angle d'enroulement.
